(19) Europäisches Patentamt
European Patent Office
Office européen des brevets

(11) **EP 4 258 134 A1**

(12) **EUROPEAN PATENT APPLICATION**

(43) Date of publication:
**11.10.2023 Bulletin 2023/41**

(21) Application number: **22214515.3**

(22) Date of filing: **19.12.2022**

(51) International Patent Classification (IPC):
***G06F 17/11*** *(2006.01)* ***G06N 5/01*** *(2023.01)*
***G06N 7/01*** *(2023.01)*

(52) Cooperative Patent Classification (CPC):
**G06F 17/11; G06N 5/01; G06N 7/01**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.04.2022 JP 2022062660**

(71) Applicant: **FUJITSU LIMITED**
**Kawasaki-shi, Kanagawa 211-8588 (JP)**

(72) Inventor: **Dote, Aki**
**Kawasaki-shi, Kanagawa, 211-8588 (JP)**

(74) Representative: **Hoffmann Eitle**
**Patent- und Rechtsanwälte PartmbB**
**Arabellastraße 30**
**81925 München (DE)**

(54) **OPTIMIZATION DEVICE, OPTIMIZATION METHOD, AND OPTIMIZATION PROGRAM**

(57) An optimization device including: a state holding unit that holds each of values of a plurality of state variables included in an evaluation function; a calculation unit that calculates change values of the evaluation function when any one of the values of the plurality of state variables changes with a probability based on a weight value of each of the plurality of state variables, and calculates evaluation values that evaluate which state transition to accept among the plurality of state variables, based on the calculated change values and correction values that correspond to susceptibility to change in the state variables of which the values have been changed; and an updating unit that changes one of the held values of any one of the state variables among the plurality of state variables, based on the calculated evaluation values.

FIG. 1

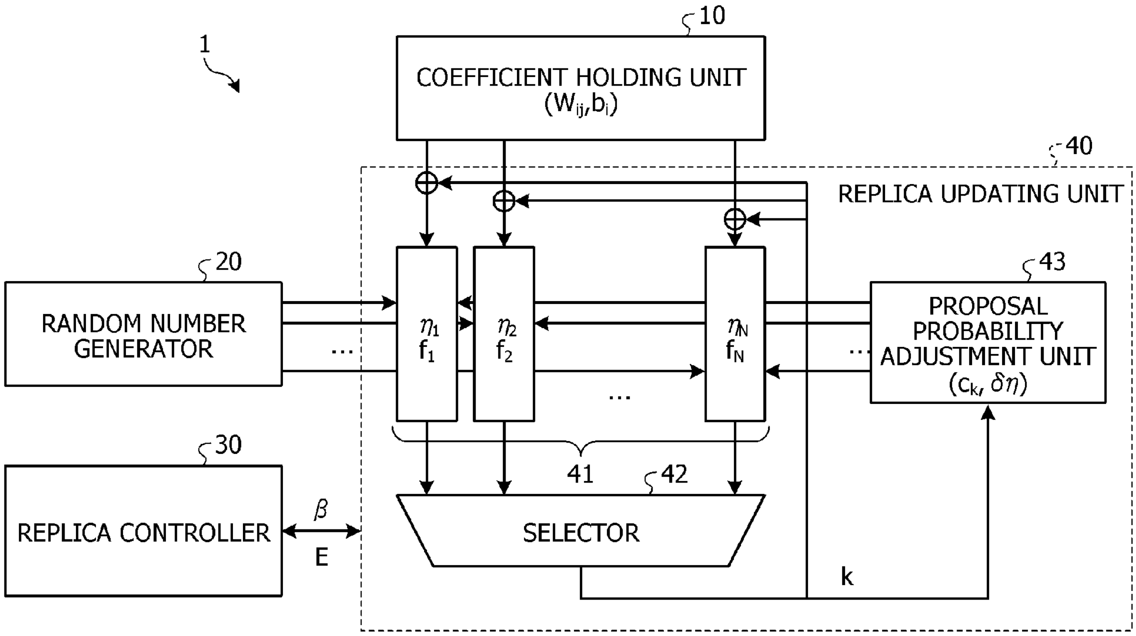


EP 4 258 134 A1

Processed by Luminess, 75001 PARIS (FR)

## Description

FIELD

The embodiments discussed herein are related to an optimization device, an optimization method, and an optimization program.

BACKGROUND

As an approach for solving a combinatorial optimization problem, there is an approach of transforming the combinatorial optimization problem into an Ising model representing a spin behavior of a magnetic material and transitioning the state of the Ising model to a state with lower energy using the Markov chain Monte Carlo method. Hereinafter, the Markov chain Monte Carlo method will be abbreviated as MCMC method. The state of the Ising model can be expressed by a combination of values of a plurality of state variables and, when the number of state variables is N, can be represented, for example, as x = ($x_1$, $x_2$, ..., $x_N$). As each state variable, a binary variable that takes a value of 0 or 1, or a spin variable that takes a value of $\pm 1$ can be used.

An Ising-type energy function E(x) representing the energy of the Ising model is defined, for example, by following formula (1).

[Mathematical Formula 1]

$$E(x) = -\sum_{\langle i,j \rangle} W_{ij} x_i x_j - \sum_i b_i x_i \quad \cdots (1)$$

The first term on the right side is for integrating the products of values (0 or 1) of two state variables and a weight value (representing the strength of correlation between the two state variables) for all combinations of all state variables of the Ising model with neither omission nor duplication. The reference sign $x_i$ denotes a state variable having identification information (hereinafter referred to as an index value) of i, the reference sign $x_j$ denotes a state variable with an index value = j, and the reference sign $W_{ij}$ denotes a weight value indicating the magnitude of correlation between the state variables with index values = i and j. In addition, the range of the index values i is 1, 2, ..., N when the number of state variables is N.

The second term on the right side is for finding the total sum of the products of bias coefficients and the state variables for each index value. The reference sign $b_i$ indicates the bias coefficient for the index value = i.

In addition, when the state variable $x_i$ changes to become $x'_i$, the spin flip (a change in value of the state variable), which is the energy change $\Delta E_i$ associated with 1-bit flip, is represented by following formula (2). Note that formula (2) is established at the time of 1-bit flip, and the inside of the parentheses indicates the local field (total input) of the bit i. Furthermore, $\delta x_i = x'_i - x_i$ holds for $\delta x_i$.

[Mathematical Formula 2]

$$\Delta E_i = E(x)|_{x_i \to x'_i} - E(x) = -\delta x_i \left( \sum_j W_{ij} x_i + b_i \right) \quad \cdots (2)$$

For the acceptance probability of a certain state transition with respect to an energy change $\Delta E$ associated with the certain state transition, an acceptance probability $A_i$ specified by the Metropolis criterion (Metropolis method) represented by following formula (3), or the like can be used.

[Mathematical Formula 3]

$$A_i = min[1, exp(-\beta \cdot \Delta E_i)] \quad \cdots (3)$$

In formula (3), $\beta$ denotes the inverse temperature (the reciprocal of the temperature value representing the temperature). State transitions with increasing energy are also stochastically permitted. In the usual MCMC method, a state index i to flip is selected randomly or in order of index values (sequentially), and based on the energy change $\Delta E$ associated with the state transition in which the value of the selected state variable changes, this state transition is permitted with the above-described acceptance probability $A_i$. For example, in the MCMC method, the acceptance

probability $A_i$ is compared with a uniform random number $u \in (0, 1)$, and the flip (state transition) is permitted when $u < A_i$ is satisfied, while current state is maintained (rejection) when $u < A_i$ is not satisfied. Then, when that state transition is permitted, the value of the state variable is updated. Such processing is repeated a predetermined number of iterations.

When a state that gives the lowest energy (optimal solution) is searched for, for example, if sufficiently large $\beta$ is taken (low temperature), a low energy state is achieved with a high probability. In an actual optimization problem, trapping in the local solution will happen if $\beta$ is large, and thus, in a search for the optimal solution, annealing (SA: simulated annealing) that lowers the temperature slowly, or the exchange Monte Carlo method (PT: parallel tempering) that exchanges states between multiple MCMC simulations running at different temperatures such that trapping in the local solution will not happen.

In such a search for the optimal solution, since a state change will not be caused (will be rejected) at the time of the local optimal ("$\Delta E_i > 0$, $\forall i=1,...,N$) or a low temperature ($\beta >> 1$), the solution search efficiency deteriorates, and the search takes a long time in some cases. A rejection-free scheme (hereinafter referred to as an RF method) is known as an approach for efficiently searching for the optimal solution.

In the RF method, instead of randomly choosing one flip bit and deciding whether to accept it or not, the flip bit is selected based on a weighted probability ($P_i$) as in following formulas (4) to (7).

[Mathematical Formula 4]

$$P_i = A_i \Big/ \sum_{j=1}^{N} A_j \qquad \cdots (4)$$

[Mathematical Formula 5]

$$r = u \sum_{j}^{N} A_i \qquad \cdots (5)$$

[Mathematical Formula 6]

$$\sum_{j=1}^{k-1} A_i < r < \sum_{j}^{k} A_j \qquad \cdots (6)$$

[Mathematical Formula 7]

$$\left.\begin{array}{ll} f_i = u_i^{1/P_i} \propto u_i^{1/A_i} & \text{(Maximum value)} \\ f_i = (\log u_i)/A_i & \text{(Maximum value)} \\ f_i = \beta \max(0, \Delta E_i) + \log(-\log u_i) & \text{(Minimum value for metropolis)} \end{array}\right\} \cdots (7)$$

Formula (4) is a formula for the weighted probability ($P_i$) in the RF method. In the RF method, a random number (r) is computed according to formula (5), and a bit k that satisfies formula (6) is flipped. Alternatively, an evaluation value $f_i$ (stochastic key) is computed in parallel for all bits by one of the methods in formula (7), and the bit that has the maximum value or minimum value is flipped.

In this RF method, a state transition occurs in each iteration, and the state search can be made efficiently. In addition, in the RF method, the amount of computation is more than N times greater than the amount of computation in the usual MCMC, but by implementing the RF method in a parallel circuit (formula (7)), the search can be efficiently made without slowing down.

Examples of the related art include: Japanese Laid-open Patent Publication No. 2010-250599; and International Publication Pamphlet No. WO 2020/54062 are disclosed as related art.

## SUMMARY

## TECHNICAL PROBLEM

However, in the above-described prior art, depending on the given problem, a phenomenon will be sometimes observed in which only some (a particular plurality of) bits are flipped, and the remaining bits are hardly flipped. Such a phenomenon means that the search for the optimal solution is biased toward a partial subspace of the state space and will be a cause of a significant degradation in search efficiency.

In one aspect, it is intended to provide an optimization device, an optimization method, and an optimization program that enable an efficient search for an optimal solution.

## SOLUTION TO PROBLEM

According to an aspect of the embodiments, there is provided an optimization device including: a state holding unit that holds each of values of a plurality of state variables included in an evaluation function; a calculation unit that calculates change values of the evaluation function when any one of the values of the plurality of state variables changes with a probability based on a weight value of each of the plurality of state variables, and calculates evaluation values that evaluate which state transition to accept among the plurality of state variables, based on the calculated change values and correction values that correspond to susceptibility to change in the state variables of which the values have been changed; and an updating unit that changes one of the held values of any one of the state variables among the plurality of state variables, based on the calculated evaluation values.

## ADVANTAGEOUS EFFECTS OF INVENTION

An efficient search for an optimal solution is enabled.

## BRIEF DESCRIPTION OF DRAWINGS

FIG. 1 is a block diagram illustrating a configuration example of an optimization device according to an embodiment;
FIG. 2A is a block diagram illustrating an example of a computation unit of the optimization device according to the embodiment;
FIG. 2B is a block diagram illustrating an example of the computation unit of the optimization device according to the embodiment;
FIG. 3 is a block diagram illustrating an example of a selector of the optimization device according to the embodiment;
FIG. 4A is a flowchart illustrating an action example of the optimization device according to the embodiment;
FIG. 4B is a flowchart illustrating an action example of the optimization device according to the embodiment;
FIG. 5A is an explanatory diagram explaining an example of a flip rate;
FIG. 5B is an explanatory diagram explaining an example of the flip rate;
FIG. 5C is an explanatory diagram explaining an example of the flip rate;
FIG. 6 is an explanatory diagram explaining the relationship between the number of iterations and the probability of obtaining the lowest energy state;
FIG. 7 is a block diagram illustrating a modification of the optimization device according to the embodiment; and
FIG. 8 is an explanatory diagram explaining an example of a computer configuration.

## DESCRIPTION OF EMBODIMENTS

Hereinafter, an optimization device, an optimization method, and an optimization program according to embodiments will be described with reference to the drawings. Configurations having the same functions in the embodiments are denoted by the same reference signs, and redundant description will be omitted. Note that the optimization device, the optimization method, and the optimization program to be described in the embodiments below are merely examples and do not limit the embodiments. In addition, each embodiment below may be appropriately combined unless otherwise contradicted.

FIG. 1 is a block diagram illustrating a configuration example of an optimization device according to an embodiment. As illustrated in FIG. 1, an optimization device 1 includes a coefficient holding unit 10, a random number generator 20, a replica controller 30, and a replica updating unit 40. This optimization device 1 is an example of an optimization device that, when searching for a solution using reproduction (replicas) of a certain state (spin bit sequence with different temperature parameters) in simulated annealing using an Ising model, searches for a state at a certain temperature parameter (β). For example, for the optimization device 1, dedicated hardware with an integrated circuit, a field-programmable gate array (FPGA), or the like may be applied, or a personal computer (PC) or the like including a graphics processing unit (GPU) or a central processing unit (CPU) may be applied.

Note that, in the simulated annealing using the Ising model, only one state variable among N state variables changes in association with one state transition. Thus, in the following description, index values (i) that identify between individual state transitions from each other are assumed to be equal to the index value of one state variable. However, the index values are not limited to the mode in which the index value of the state transition and the index value of the state transition that changes in association with the state transition match.

First, an outline of the optimization device 1 will be described. In a replica, the optimization device 1 computes an evaluation value $f_i$ (stochastic key) in parallel for all bits by the RF method and searches for a solution by changing (flipping) the state variable (bit k) of which the evaluation value $f_i$ takes the maximum value or the minimum value. Here, in the optimization device 1, for each state variable, the evaluation value $f_i$ as to whether or not to change the state variable is adjusted by a correction value ($\eta_i$) corresponding to the susceptibility to change in the state variable. This allows the optimization device 1 to suppress variations in the frequency at which the state variable is changed and to restrain the search for the optimal solution from biasing toward a partial subspace of the state space.

For example, when it is assumed that one state variable to be transitioned is randomly chosen with a proposal probability $q_i$,$0<q_i\leq 1$ and $\Sigma_i q_i=1$ a transition probability ($P_i$) of each state variable in the Metropolis method is given as $P_i = Q_iA_i = q_i\min(1, \exp(-\beta\Delta E_i))$.

The optimization device 1 selects a flip bit (the state variable to be changed) based on a weighted probability ($P'_i$) indicated by following formula (8). For example, a random number (r) indicated by formula (9) is computed, and the bit k that satisfies formula (10) is flipped.

[Mathematical Formula 8]

$$P_i' = Q_i A_i \Big/ \sum_{j=1}^{N} Q_j A_j \quad \cdots (8)$$

[Mathematical Formula 9]

$$r = u \sum_{j}^{N} Q_j A_i \quad \cdots (9)$$

[Mathematical Formula 10]

$$\sum_{j=1}^{k-1} Q_j P_j < r \leq \sum_{j}^{k} Q_j A_j \quad \cdots (10)$$

For example, in the optimization device 1, the replica updating unit 40 computes the evaluation value ($f_i$) for evaluating whether or not to accept the state transition, in parallel for all (N) bits by following formula (11), and flips the bit that has the minimum value.

[Mathematical Formula 11]

$$f_i = \beta(\max(0, \Delta E_i) + \eta_i) + \log(-\log u_i)(\text{Minimum Value for metropolis}) \cdots (11)$$

In this formula (11), $\eta_i$ included in the former term part denotes the correction value corresponding to the susceptibility to change in the state variable. In addition, the latter term part is an example of the random number. In formula (11), the sum of the acceptance probability of the state transition and the random number is calculated as the evaluation value.

Here, regarding $\eta_i$, the greater the value, the lower the probability that the state variable will be flipped (changed). Therefore, for bits (state variables) that are susceptible to change, a great value only has to be set in advance as the

correction value ($\eta_i$) in a memory or the like. In principle, the relationship $\eta_i$ = -log($q_i$) $\geq$ 0 is satisfied with the proposal probability $q_i$. However, in the algorithm that searches for the minimum value using formula (11), all the state variables will be unchanged even if taking $\eta_i \rightarrow \eta_i + \alpha$ with an appropriate real number $\alpha$, and thus any value may be used for the correction value ($\eta_i$).

In addition, in the optimization device 1, the replica updating unit 40 may dynamically adjust the correction value ($\eta_i$) for each state variable while searching for a solution. For example, the replica updating unit 40 determines the correction value ($\eta_i$) based on the number of times each state variable (bit i) identified by the index value (i) has been changed by the evaluation value ($f_i$).

For example, the replica updating unit 40 finds the bit flip rate based on the number of times the bit i has been changed. The flip rate is assumed as the number of times the bit i has been flipped/the number of iterations in the solution search. The replica updating unit 40 measures the above flip rate during a fixed number of iterations and increases the correction value ($\eta_i$) until the flip rate falls within a threshold value (for example, 3 $\times$ 1/N).

As an example, the replica updating unit 40 performs the processes of 1. measuring the flip rate, 2. increasing $\eta_i$ of one bit with the greatest flip rate or a bit exceeding a threshold value ($\eta_i = \eta_i + \delta\eta$), and 3. repeating 1 and 2 above until the maximum value of the flip rate becomes equal to or less than the threshold value. In the above processes, if $\delta\eta > 0$ is sufficiently small, the flip rate of each bit converges to the threshold value or less.

Note that, the replica updating unit 40 may group the state variables in advance on the basis of the values of the coefficients of the problem, or the like, and for each of these groups, determine the correction value within the group, based on the number of times the change by the evaluation value (f) has been made. For example, $\Sigma_j W_{ij} + b_i$ in formula (2) is computed for each variable (i), and bits with similar values are grouped. By assuming the flip rate as (the number of flips in each group)/(the number of iterations $\times$ the number of bits in each group), the replica updating unit 40 finds an average flip rate within the group. Next, the replica updating unit 40 finds the correction value ($\eta$) of each bit within the group by performing processes similar to the above-described processes on the basis of the average flip rate within the group. Note that, when a plurality of independent simulations (replicas) is executed (details will be described later), the flip rate may be found by averaging the same bits or groups of separate replicas, and the correction value ($\eta$) may be found.

In addition, the replica updating unit 40 may find an average value of the energy change values ($\Delta E_i$) in formula (2), for each state variable (bit i) identified by the index value (i), and determine the correction value ($\eta_i$) based on the obtained average value.

For example, the replica updating unit 40 finds, for example, an average value of

[Mathematical Formula 12]

$$max\left(0, \Delta E_i\left(x^{(t)}\right)\right)$$

$$\left(x^{(t)} = \left(x_1^{(t)}, x_2^{(t)}, \ldots x_N^{(t)}\right) \text{ Denotes state at number of iterations t}\right)$$

that changes every time an iteration is performed, for each bit. From this average value, the correction value ($\eta_i$) is given as in following formula (12).

[Mathematical Formula 13]

$$\eta_i = -\frac{1}{L}\sum_{\{t=1\}}^{L} max\left(0, \Delta E_i\left(x^{(t)}\right)\right) \quad \cdots (12)$$

Subsequently, the configuration of the optimization device 1 will be described. For example, the coefficient holding unit 10 is a register, a static random access memory (SRAM), or the like. The coefficient holding unit 10 holds each of the values of a plurality of state variables included in an evaluation function representing energy and additionally, outputs the values of the plurality of state variables at every predetermined number of iterations. The evaluation function is, for example, the energy function E(x) as indicated by formula (1).

The random number generator 20 generates random numbers used by the replica updating unit 40. The random number generator 20 produces a random number value r = log(-log($u_i$))), where $u_i$'s are the independent uniform random numbers greater than zero but equal to or less than one, for example. The random number generator 20 can be achieved, for example, using a Mersenne Twister, linear feedback shift register (LFSR), or the like.

The replica controller 30 sets values (the energy E and the inverse temperature (or temperature) $\beta$) relating to reproduction (replicas) of a certain state (spin bit sequence with different temperature parameters).

The replica updating unit 40 is a processing unit that searches for a state (solution space) using the replicas set by the replica controller 30. For example, the replica updating unit 40 includes a computation unit 41, a selector 42, and a proposal probability adjustment unit 43.

The computation unit 41 is a processing unit that computes the evaluation value $f_i$ in parallel for all bits from 1 to N, by the RF method, while adjusting with the correction value ($\eta_i$) corresponding to the susceptibility to change in the state variable.

FIGs. 2A and 2B are block diagrams illustrating examples of the computation unit of the optimization device according to the embodiment. For example, as illustrated in FIG. 2A, the computation unit 41 for each state variable (bit i) includes registers 410a to 410d, adders 411a to 411c, integrators 412a and 412b, and arithmetic units 413a and 413b. Note that k indicates the index of the bit selected to be flipped by the selector 42.

The registers 410a to 410d hold values (the local field $h_i$ and the state $x_i$) read from the coefficient holding unit 10, the correction value ($\eta_i$), the evaluation value ($f_i$), and the like for the state variable (bit i).

For example, for the state variable (bit i), the values ($h_i$ and $x_i$) read from the coefficient holding unit 10 are held in the registers 410a and 410b. The adder 411a updates $h_i$ by adding the value read from the coefficient holding unit 10 to $h_i$ held in the register 410a.

The integrator 412a integrates $h_i$ held in the register 410a and $x_i$ held in the register 410b. The arithmetic unit 413a calculates $\Delta E_i$ by performing arithmetic on formula (2) on the basis of the arithmetic result of the integrator 412a.

The arithmetic unit 413b calculates max(0, $\Delta E_i$) on the basis of $\Delta E_i$ calculated by the arithmetic unit 413a. The integrator 412b integrates max(0, $\Delta E_i$) calculated by the arithmetic unit 413b by $\beta$ (inverse temperature).

The adder 411c adds the correction value ($\eta_i$) held in the register 410c to $\beta$(max(0, $\Delta E_i$)). This obtains a value corresponding to the first term of formula (11).

In addition, the adder 411c adds the random number (corresponding to the second term of formula (11)) generated by the random number generator 20 to the value corresponding to the first term of formula (11). The computation unit 41 obtains $f_i$ by an arithmetic process up to this adder 411c. Obtained $f_i$ in this manner is stored in the register 410d.

The adder 411b adds $\delta\eta_i$ notified by the proposal probability adjustment unit 43 to $\eta_i$ stored in the register 410c to update $\eta_i$.

FIG. 2B depicts the computation unit 41a when the average value of the energy change values ($\Delta E_i$) in (2) is found and the correction value ($\eta_i$) is determined based on the obtained average value. As illustrated in FIG. 2B, the computation unit 41a differs from the computation unit 41a in FIG. 2A in including an arithmetic unit 413c that performs arithmetic on formula (12).

The selector 42 selects the state variable (bit k) of which the evaluation value $f_i$ computed by the computation unit 41 takes the maximum value or the minimum value and changes (flips) the selected state variable.

FIG. 3 is a block diagram illustrating an example of the selector 42 of the optimization device 1 according to the embodiment. As illustrated in FIG. 3, the selector 42 includes a plurality of selection circuits (such as selection circuits 421 to 426) arranged in a plurality of stages in a tree form. For two evaluation values, each selection circuit in the first stage selects and outputs the greater evaluation value (in the case of the maximum value) and the index value corresponding to the greater evaluation value. For example, when an evaluation value $f_1$ with an index value of 1 (i = 1) is greater than an evaluation value $f_2$ with an index value of 2 (i = 2), the selection circuit 421 outputs the evaluation value $f_1$ and its index value of 2. Note that, when the minimum value is selected, for two evaluation values, each selection circuit selects and outputs the smaller evaluation value and the index value corresponding to the smaller evaluation value.

As in the first stage, the selection circuits in the second and subsequent stages select and output the greater evaluation value and the index value corresponding to the greater evaluation value for two evaluation values output by two selection circuits in the previous stage.

In this manner, the selector 42 selects one state variable (bit k) of which the evaluation value $f_i$ takes the maximum value or the minimum value, by selecting one of the state variables based on the magnitude relationship between the evaluation values of the respective state variables. The selector 42 outputs the selected state variable to the coefficient holding unit 10 and changes the value of the selected state variable.

The proposal probability adjustment unit 43 sets the correction value ($\eta_i$) for each state variable in the computation unit 41. For example, the proposal probability adjustment unit 43 may read $\eta_i$ preset in a memory or the like and set read $\eta_i$ in the computation unit 41 for each state variable.

In addition, the proposal probability adjustment unit 43 acquires the changed (flipped) state variable (bit k) from the selector 42 and counts the acquired state variable (bit k) as the number of flips ($c_k$). In this manner, the correction value ($\eta_i$) for each state variable may be set on the basis of the number of flips counted for each state variable. For example, the proposal probability adjustment unit 43 is an example of a determination unit.

For example, as described above, the proposal probability adjustment unit 43 finds the flip rate on the basis of the number of flips and the number of iterations for solution. Next, the proposal probability adjustment unit 43 increases ($\delta\eta$) the correction value of each state variable, based on the comparison result between the obtained flip rate and a threshold value.

Note that, as described above, the proposal probability adjustment unit 43 may count the number of flips of the state variable for each group preset on the basis of the values of the coefficients of the problem, or the like, and find the average flip rate for each group. In this case, the proposal probability adjustment unit 43 increases ($\delta\eta$) the correction value of the state variable within each group, based on the comparison result between the average flip rate within the group and the threshold value.

FIG. 4A is a flowchart illustrating an action example of the optimization device 1 according to the embodiment. As illustrated in FIG. 4A, when the process is started, the optimization device 1 performs an initialization process (S1).

For example, in the initialization process, the replica controller 30 sets parameters such as the number of repetitions (specified number of times $N_{loop}$) for finding the solution and the inverse temperature ($\beta$) in the replica updating unit 40. In addition, the proposal probability adjustment unit 43 reads $\eta_i$ preset in a memory or the like to set read $\eta_i$ in the computation unit 41 and resets the number of flips ($c_k$).

Next, the computation unit 41 performs a process of computing the evaluation value ($f_i$) for evaluating whether or not to accept the state transition, in parallel for all (N) bits by formula (11), and searching for the bit (index k) that has the minimum value (S2).

For example, the computation unit 41 reads values (the local field $h_i$ and the state $x_i$) corresponding to the index, from the coefficient holding unit 10 (S2a), and computes the evaluation values $f_1$ to $f_N$ in parallel for all (N) bits (S2b). Next, the selector 42 compares the evaluation values $f_1$ to $f_N$ computed by the computation unit 41 and searches for the index k that has the minimum value (S2c).

Next, the selector 42 updates the values stored in the coefficient holding unit 10, such as the state $x_k$, the local field $h_i$, and the energy E, corresponding to the index k that has the minimum value. In addition, the proposal probability adjustment unit 43 increments and updates the number-of-flips counter ($c_k$) corresponding to the index k (S3).

Next, the replica controller 30 verifies whether or not the state variable has been updated the specified number of times $N_{loop}$ (S4) and, when the verification is negative (S4: No), returns the process to S2. This will cause the optimization device 1 to search for a solution until the specified number of times $N_{loop}$ is reached.

When the verification in S4 is affirmative (S4: Yes), the proposal probability adjustment unit 43 computes the flip rate ($\eta$) on the basis of the number of flips ($c_i$) for each state variable (S5) and ends the process. For example, this computation of the flip rate ($\eta$) is given as $r_i = c_i/N_{loop}$ or the like. Note that, when the state variables are grouped, the proposal probability adjustment unit 43 may count the number of flips of the state variable for each group and find the average flip rate for each group.

FIG. 4B is a flowchart illustrating an action example of the optimization device 1 according to the embodiment and, for example, is an action example of a case where the correction value ($\eta_i$) for each state variable is dynamically adjusted while a solution is searched for.

As illustrated in FIG. 4B, when the process is started, the optimization device 1 performs the above-described initialization process (S1). Next, the optimization device 1 executes the processes from S2 to S5 described above and executes the RF method including the computation of the flip rate ($r_i$).

Next, the proposal probability adjustment unit 43 sets (adjusts) the correction value ($\eta_i$) for each state variable as described above on the basis of the flip rate ($\eta$) of each state variable (S6).

For example, the proposal probability adjustment unit 43 sets the correction value ($\eta_i$) for each state variable as follows, as a method for suppressing the maximum value of the flip rate. · Take $\eta_k \rightarrow \eta_k + \delta\eta$ for the bit k in which $r_i$ has the maximum value. · Take a predetermined value designated beforehand for $\delta\eta$. · Application not only to the maximum value but also to the bits equal to or greater than the threshold value is acceptable.

In addition, the proposal probability adjustment unit 43 sets the correction value ($\eta_i$) for each state variable as follows, as a method for giving a slope to the flip rate. · For each state variable, take $\eta_i \rightarrow \eta_i + \delta\eta \cdot r_i$, for example. · Instead of multiplying by $\delta\eta$, $r_i$ may be transformed with an appropriate monotonically increasing function.

In addition, the proposal probability adjustment unit 43 may perform the following when setting the correction value ($\eta_i$) by grouping the state variables. · The average is taken within the group as the flip rate, and the same value of $\eta_i$ is used within the group. · When a plurality of replicas is used, the flip rates of the same index may be summed up and averaged between the replicas.

Note that, when all the correction values ($\eta_i$) meet $\eta_i > 0$, the proposal probability adjustment unit 43 may subtract the minimum correction value from the whole. This allows the proposal probability adjustment unit 43 to restrain $\eta_i$ from increasing infinitely.

Next, the replica controller 30 verifies whether or not the state variable has been updated the specified number of times $N_{loop}$ (S7) and, when the verification is negative (S7: No), returns the process to S2. When the verification is affirmative (S7: Yes), the replica controller 30 ends the process.

FIGs. 5A to 5C are explanatory diagrams explaining examples of the flip rate. For example, in FIGs. 5A to 5C, the horizontal axis indicates the index values of 256 state variables (index), and the vertical axis indicates the flip rate for each index value (flip rate). Here, the parallel lines in the figure represent the flip rate 1/N when all bits are equivalent. In addition, FIG. 5A depicts a case of no correction using no correction value ($\eta$). FIG. 5B depicts a case where the group of state variables with index values equal to and greater than 161 is corrected using a common correction value

($\eta$ = 5). FIG. 5C depicts a case where also the index values less than 161 are further divided into four groups and corrected using the correction value ($\eta$) of each group.

As illustrated in FIG. 5A, with no correction, the flip rate in the latter half (index $\geq$ 161) is 5 to 10 times higher than in the former half. For example, the search for the optimal solution will be biased toward a partial subspace of the state space.

In FIG. 5B, the flip rate in the latter half (index $\geq$ 161) is close to the flip rate in the former half part, compared with the case in FIG. 5A. In addition, in FIG. 5C, the bias in the flip rate is further improved, and the bias in the flip rate becomes smaller over all indices.

FIG. 6 is an explanatory diagram explaining the relationship between the number of iterations and the probability of obtaining the lowest energy state. In FIG. 6, the horizontal axis represents the number of iterations until a solution is obtained (ITS: iteration number to solution), and the vertical axis represents the empirical cumulative distribution function (ECDF) in which the solution was obtained when the experiment was repeated a plurality of times.

In addition, a graph G1 is a graph indicating the arithmetic result under the same condition (no correction) as in FIG. 5A. A graph G2 is a graph indicating the arithmetic result under the same condition as in FIG. 5B (the group of state variables with index values equal to and greater than 161 is corrected using the same correction value ($\eta$ = 5)). A graph G3 is a graph indicating the arithmetic result under the same condition as in FIG. 5C (also the index values less than 161 are further divided into four groups and corrected using the correction value ($\eta$) of each group).

As illustrated in FIG. 6, it can be seen that the graphs G2 and G3 with correction can obtain a solution faster (in a shorter number of iterations) than the graph G1 with no correction. For example, when the graphs G1, G2, and G3 are compared at a portion with an ECDF of 0.50 (which is a success rate of 50%), the average number of iterations to find a solution can be reduced to 1/10.

FIG. 7 is a block diagram illustrating a modification of the optimization device according to the embodiment. For example, FIG. 7 illustrates a configuration example of an optimization device 1a that uses parallel tempering (PT, also called the exchange Monte Carlo method).

As illustrated in FIG. 7, the optimization device 1a that uses PT simultaneously performs the MCMC method using a plurality (1 to M) of replica updating units 40. The replica controller 30 compares the energy of the state of each of the replica updating units 40 at every certain number of iterations and performs an operation of exchanging the states for two temperatures (or the temperatures) with a proper probability.

In this manner, in the optimization device 1a that uses PT, by applying the replica updating units 40 described above, all bits are evenly caused to flip even at a low highest temperature, and an efficient search is enabled by decreasing the number of replicas. In addition, the replica controller 30 lowers the temperature (increases $\beta$) in accordance with a schedule designated in advance, at every certain number of iterations. In this case, the plurality of replica updating units 40 performs searches independently and simply serves to raise the success rate of locating a solution.

As described above, the optimization device 1 holds each of the values of a plurality of state variables included in the evaluation function representing the energy. In addition, the optimization device 1 computes the energy change value ($\Delta E$) when any one of the values of the plurality of state variables changes with a probability based on the weight value of each state variable. Then, based on the computed change value and the correction value ($\eta$) corresponding to the susceptibility to change in the changed state variable, the optimization device 1 calculates the evaluation value (f) for evaluating whether or not to accept the state transition. The optimization device 1 changes any one of the held values of the plurality of state variables, based on the calculated evaluation value (f).

This allows the optimization device 1 to restrain the search for the optimal solution from biasing toward a partial subspace of the state space as only some state variables are changed and the remaining state variables are hardly changed. In this manner, the optimization device 1 may achieve an efficient solution search in which the search for the optimal solution is not biased toward a partial subspace of the state space.

In addition, the optimization device 1 determines the correction value for each state variable, based on the number of times the change by the evaluation value (f) has been made. This allows the optimization device 1 to use the correction value corresponding to an actual change in the state variable during the search for the optimal solution.

In addition, for each group of the state variables, the optimization device 1 determines the correction value within the group, based on the number of times the change by the evaluation value (f) has been made. For example, regarding the state variables, state variables with similar susceptibility to change can be grouped together on the basis of the values of the coefficients of the problem (Ising model), or the like. Therefore, in the optimization device 1, by determining the correction value for each group, the correction value may be determined more efficiently than when the correction value is determined for each state variable.

In addition, the optimization device 1 determines the correction value based on the average of the energy change values when changed by the evaluation value (f). This allows the optimization device 1 to determine the correction value of each state variable such that, for example, the average of the energy change values is approximately the same.

Note that each of the illustrated components in each of the devices does not necessarily have to be physically configured as illustrated in the drawings. For example, specific modes of distribution and integration of the respective devices are not limited to those illustrated, and all or a part of the devices may be configured by being functionally or physically distributed and integrated in an optional unit according to various loads, use situations, and the like.

In addition, not only various processing functions of the coefficient holding unit 10, the random number generator 20, the replica controller 30, and the replica updating unit 40 of the optimization device 1 are implemented on a dedicated integrated circuit or FPGA, but also all or an optional part of the various processing functions may be executed on a CPU (or a microcomputer such as a micro processing unit (MPU) or micro controller unit (MCU)). In addition, it is needless to say that all or an optional part of the various processing functions may be executed on a program analyzed and executed by a CPU (or a microcomputer such as an MPU or an MCU) or on hardware by wired logic. Furthermore, the various processing functions performed by the optimization device 1 may be executed by a plurality of computers in cooperation through cloud computing.

Meanwhile, various processes described in the above embodiments may be achieved by a computer executing a program prepared in advance. Thus, hereinafter, an example of a computer configuration (hardware) that executes a program having functions similar to the functions of the above embodiments will be described. FIG. 8 is an explanatory diagram explaining an example of the computer configuration.

As illustrated in FIG. 8, a computer 200 includes a CPU 201 that executes various arithmetic processes, an input device 202 that receives data input, a monitor 203, and a speaker 204. In addition, the computer 200 includes a medium reading device 205 that reads a program and the like from a storage medium, an interface device 206 for connecting to various devices, and a communication device 207 for connecting to and communicating with an external device in a wired or wireless manner. Furthermore, the optimization device 1 includes a random access memory (RAM) 208 that temporarily stores various types of information, and a hard disk device 209. Moreover, each of the units (201 to 209) in the computer 200 is connected to a bus 210.

The hard disk device 209 stores a program 211 for executing various processes in the functional configuration (for example, the coefficient holding unit 10, the random number generator 20, the replica controller 30, and the replica updating unit 40) described in the above embodiments. In addition, the hard disk device 209 stores various types of data 212 that the program 211 refers to. The input device 202 receives, for example, input of operation information from an operator. The monitor 203 displays, for example, various screens operated by the operator. The interface device 206 is connected to, for example, a printing device or the like. The communication device 207 is connected to a communication network such as a local area network (LAN) and exchanges various types of information with an external device via the communication network.

The CPU 201 reads the program 211 stored in the hard disk device 209 and loads the program 211 into the RAM 208 to execute, thereby performing various processes relating to the functional configuration (for example, the coefficient holding unit 10, the random number generator 20, the replica controller 30, and the replica updating unit 40) described above. Note that the program 211 does not have to be stored in the hard disk device 209. For example, the program 211 stored in a storage medium readable by the computer 200 may be read and executed. For example, the storage medium readable by the computer 200 corresponds to a portable recording medium such as a compact disc read only memory (CD-ROM), a digital versatile disc (DVD) disk, or a universal serial bus (USB) memory, a semiconductor memory such as a flash memory, a hard disk drive, or the like. In addition, this program 211 may be prestored in a device connected to a public line, the Internet, a LAN, or the like, and the computer 200 may read the program 211 from this device and execute the program 211.

## Claims

**1.** An optimization device comprising:

a state holding unit that holds each of values of a plurality of state variables included in an evaluation function;
a calculation unit that calculates change values of the evaluation function when any one of the values of the plurality of state variables changes with a probability based on a weight value of each of the plurality of state variables, and calculates evaluation values that evaluate which state transition to accept among the plurality of state variables, based on the calculated change values and correction values that correspond to susceptibility to change in the state variables of which the values have been changed; and
an updating unit that changes one of the held values of any one of the state variables among the plurality of state variables, based on the calculated evaluation values.

**2.** The optimization device according to claim 1, wherein
the calculation unit calculates the change values of the evaluation function in parallel for the plurality of state variables, and calculates the evaluation values in parallel for the plurality of state variables.

3. The optimization device according to claim 2, further comprising

a selection unit that selects a first state variable included in the plurality of state variables, based on the evaluation values, wherein
the updating unit changes one of the values for the first state variable selected by the selection unit.

4. The optimization device according to claim 1, further comprising
a determination unit that determines the correction values based on a number of times the updating unit has made the change, for each of the plurality of state variables.

5. The optimization device according to claim 4, wherein
the determination unit determines the correction values within a group of the plurality of state variables for each group, based on the number of times the updating unit has made the change.

6. The optimization device according to claim 4, wherein
the determination unit determines the correction values based on an average of the change values when the updating unit has made the change.

7. An optimization method implemented by a computer, the optimization method comprising:

holding each of values of a plurality of state variables included in an evaluation function;
performing calculation processing including calculating change values of the evaluation function when any one of the values of the plurality of state variables changes with a probability based on a weight value of each of the plurality of state variables, and calculating evaluation values that evaluate which state transition to accept among the plurality of state variables, based on the calculated change values and correction values that correspond to susceptibility to change in the state variables of which the values have been changed; and
changing one of the held values of any one of the state variables among the plurality of state variables, based on the calculated evaluation values.

8. An optimization program comprising instructions which, when executed by a computer, cause the computer to perform processing including:

holding each of values of a plurality of state variables included in an evaluation function;
performing calculation processing including calculating change values of the evaluation function when any one of the values of the plurality of state variables changes with a probability based on a weight value of each of the plurality of state variables, and calculating evaluation values that evaluate which state transition to accept among the plurality of state variables, based on the calculated change values and correction values that correspond to susceptibility to change in the state variables of which the values have been changed; and
changing one of the held values of any one of the state variables among the plurality of state variables, based on the calculated evaluation values.

FIG. 1

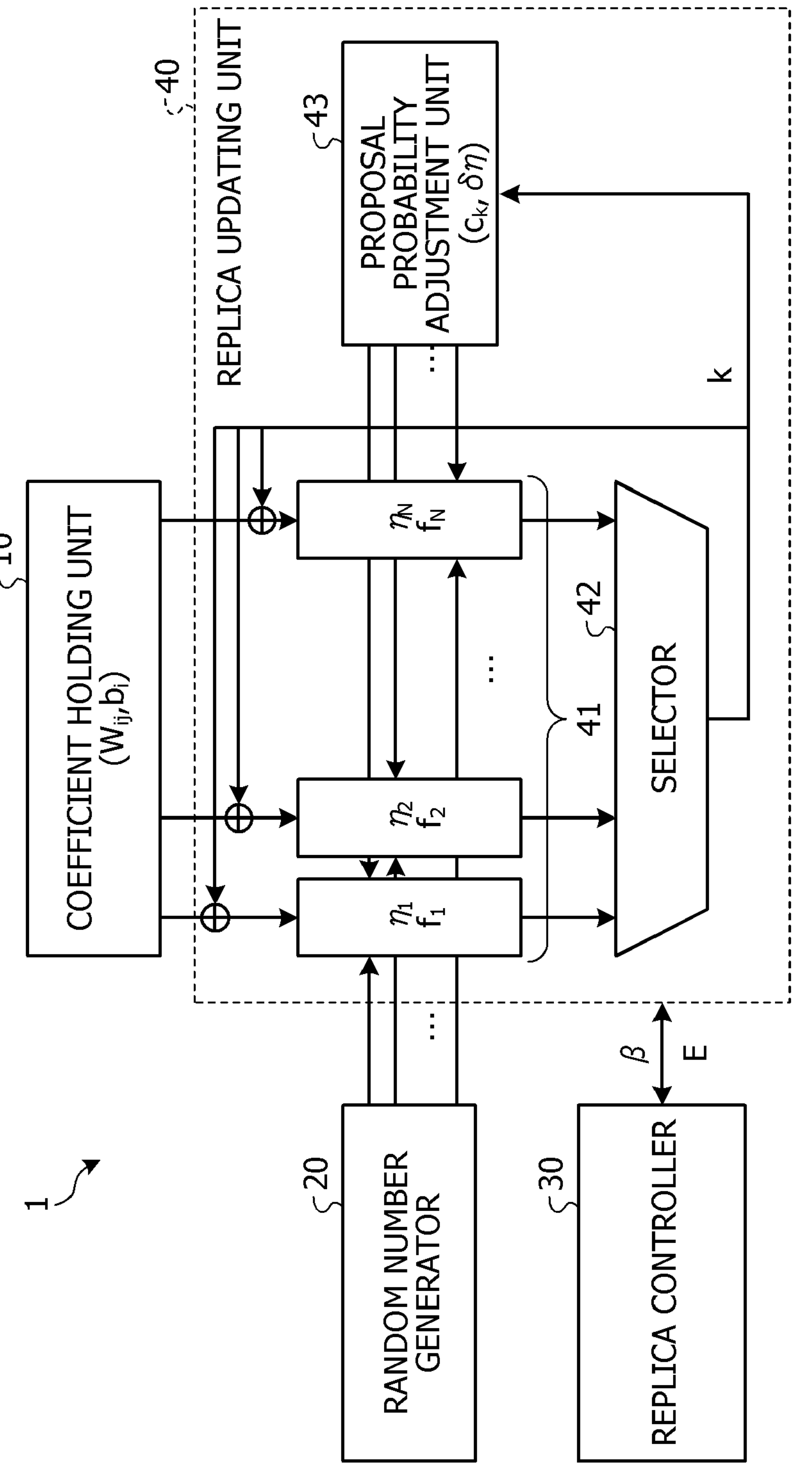
1
COEFFICIENT HOLDING UNIT
($W_{ij}$,$b_i$)
10
RANDOM NUMBER GENERATOR
20
REPLICA CONTROLLER
30
REPLICA UPDATING UNIT
40
PROPOSAL PROBABILITY ADJUSTMENT UNIT
($c_k$, $\delta\eta$)
43
$\eta_1$
$f_1$
$\eta_2$
$f_2$
$\eta_N$
$f_N$
41
SELECTOR
42
k
$\beta$
E

FIG. 2A

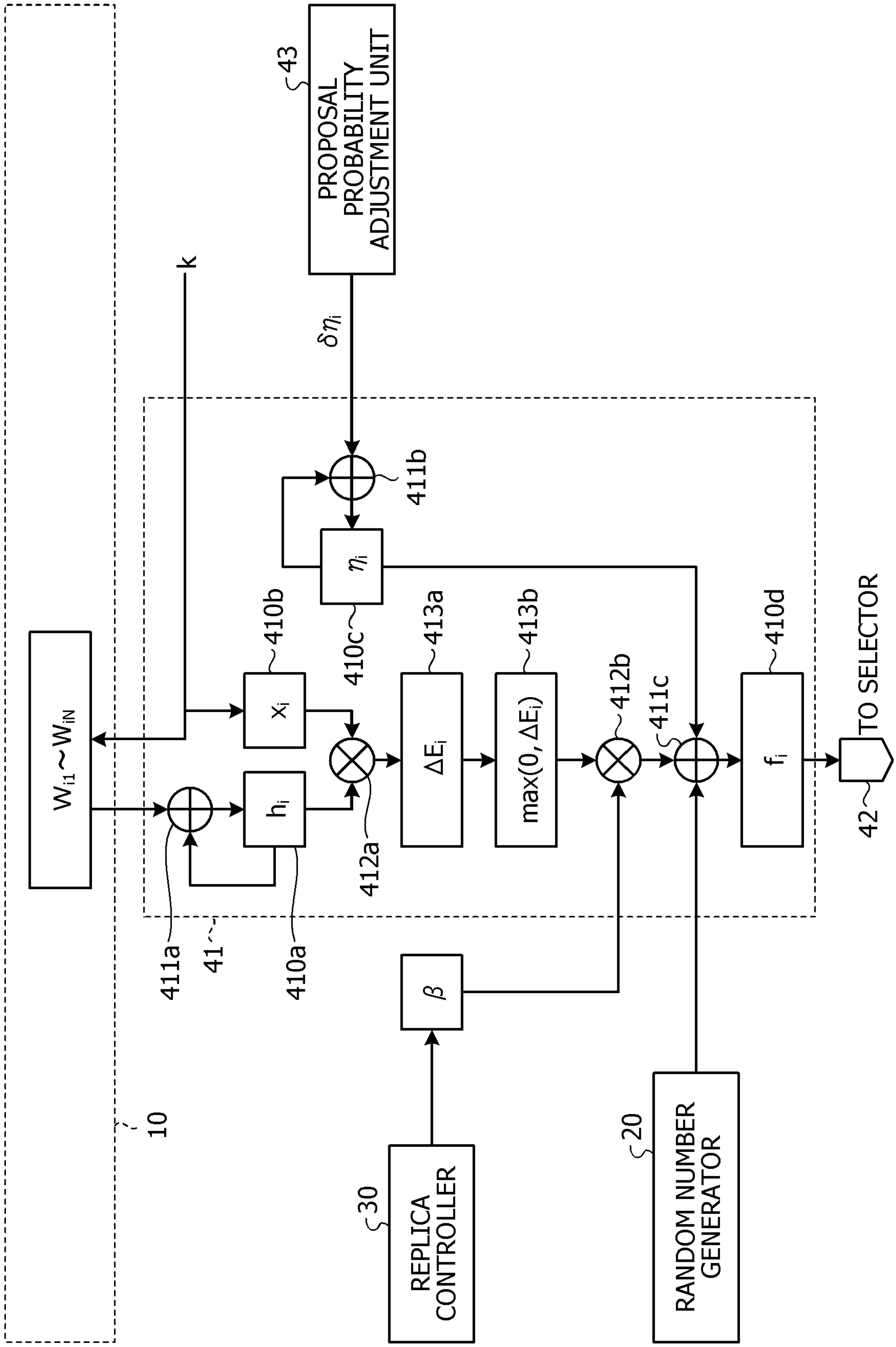

PROPOSAL PROBABILITY ADJUSTMENT UNIT
43
k
δηi
411b
ηi
410c
410b
xi
Wi1~WiN
hi
412a
ΔEi
413a
max(0, ΔEi)
413b
412b
411c
fi
410d
TO SELECTOR
42
411a
41
410a
β
10
REPLICA CONTROLLER
30
RANDOM NUMBER GENERATOR
20

FIG. 2B

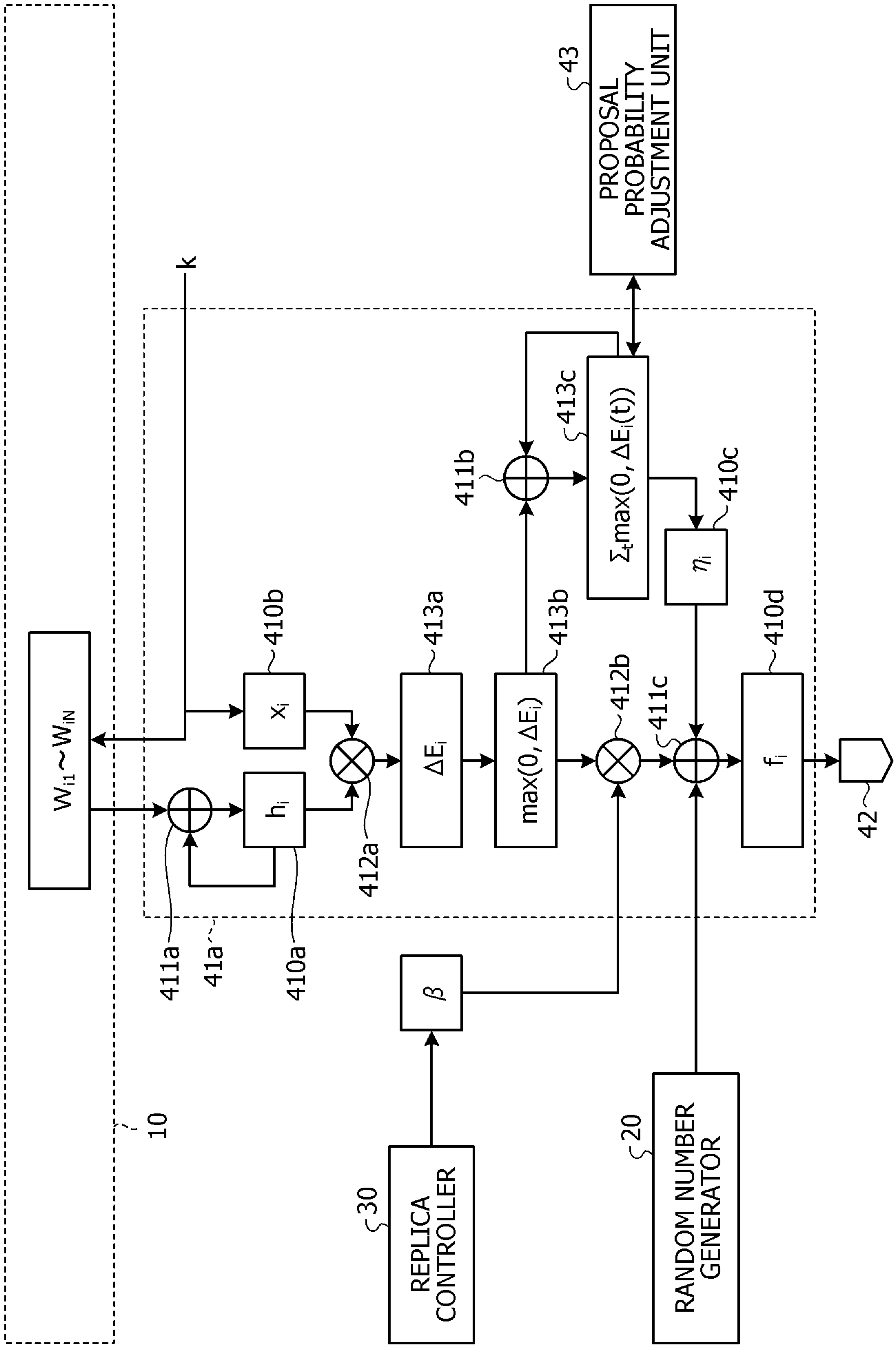
10
$W_{i1}$~$W_{iN}$
k
41a
411a
410a
$h_i$
410b
$x_i$
412a
413a
$\Delta E_i$
413b
max(0, $\Delta E_i$)
411b
413c
$\Sigma_t$max(0, $\Delta E_i$(t))
410c
$\eta_i$
412b
411c
410d
$f_i$
42
$\beta$
30
REPLICA CONTROLLER
20
RANDOM NUMBER GENERATOR
43
PROPOSAL PROBABILITY ADJUSTMENT UNIT

FIG. 3

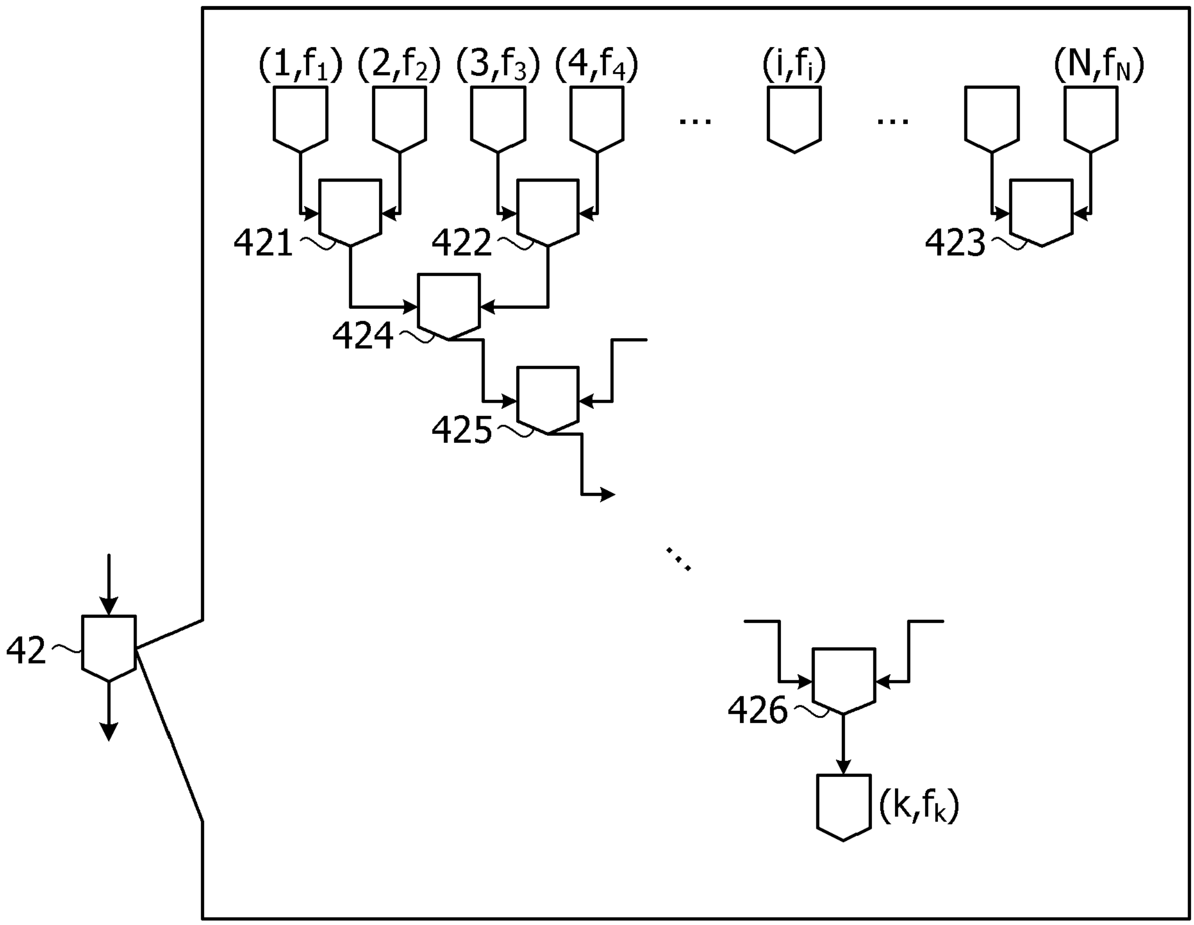

FIG. 4A

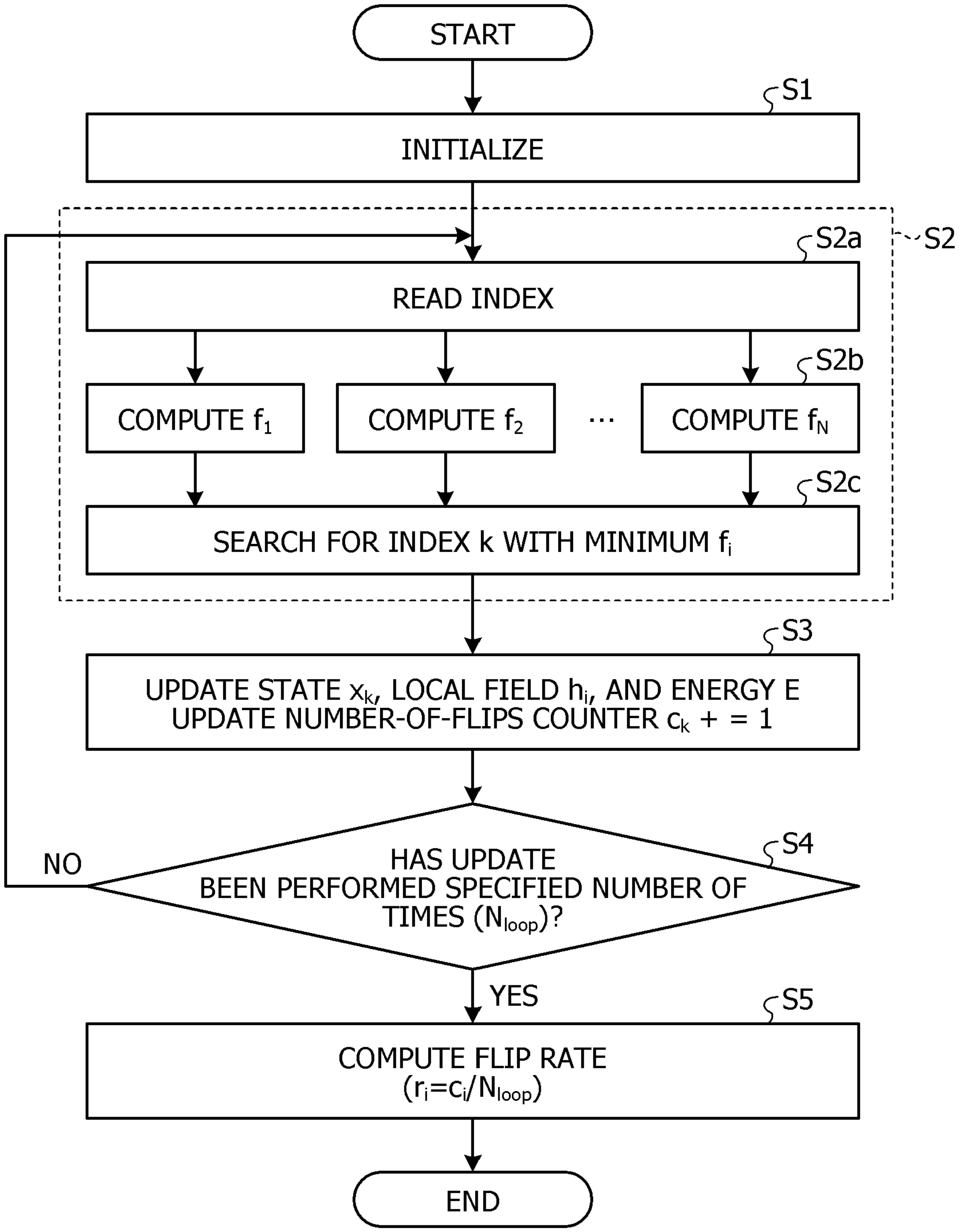
START
S1
INITIALIZE
S2
S2a
READ INDEX
S2b
COMPUTE $f_1$
COMPUTE $f_2$
···
COMPUTE $f_N$
S2c
SEARCH FOR INDEX k WITH MINIMUM $f_i$
S3
UPDATE STATE $x_k$, LOCAL FIELD $h_i$, AND ENERGY E
UPDATE NUMBER-OF-FLIPS COUNTER $c_k$ + = 1
S4
HAS UPDATE BEEN PERFORMED SPECIFIED NUMBER OF TIMES ($N_{loop}$)?
NO
YES
S5
COMPUTE FLIP RATE
($r_i=c_i/N_{loop}$)
END

FIG. 4B

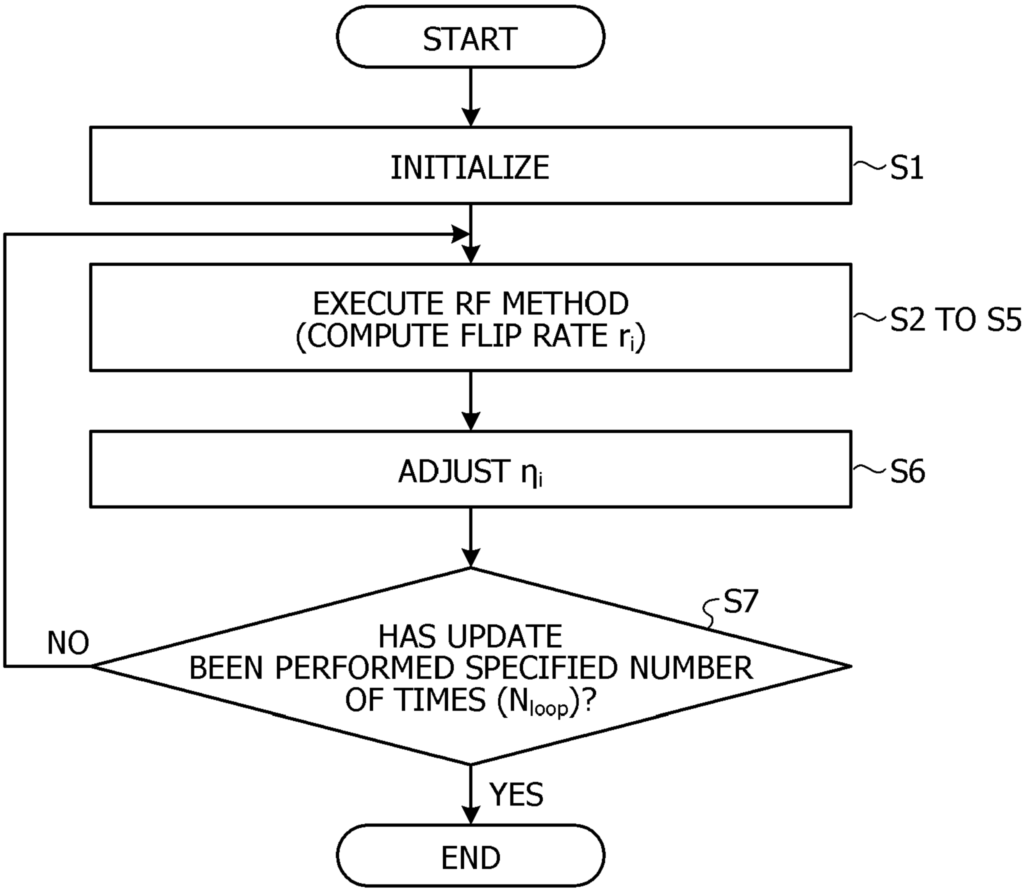
START
INITIALIZE
S1
EXECUTE RF METHOD
(COMPUTE FLIP RATE $r_i$)
S2 TO S5
ADJUST $\eta_i$
S6
S7
HAS UPDATE
BEEN PERFORMED SPECIFIED NUMBER
OF TIMES ($N_{loop}$)?
NO
YES
END

FIG. 5A

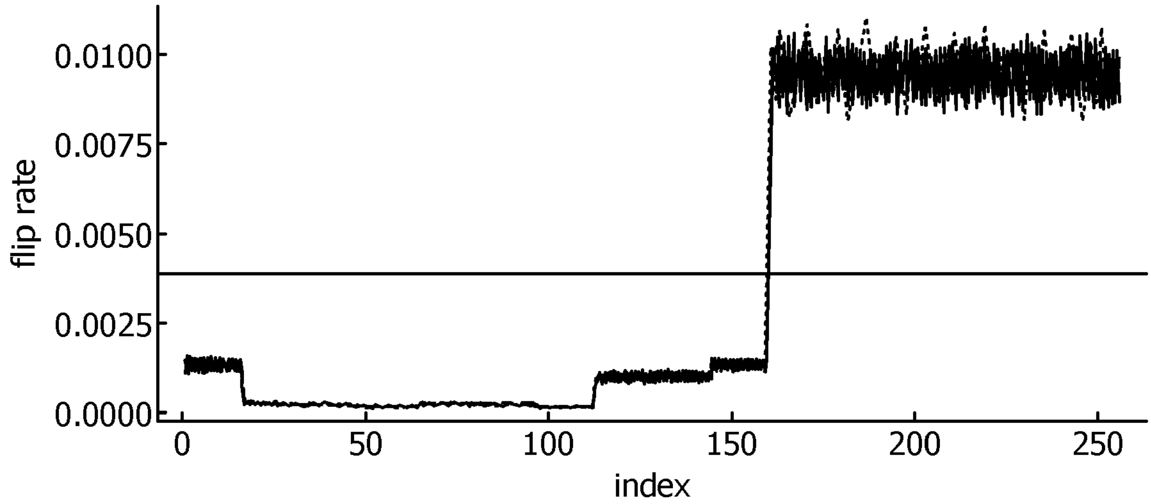
0.0100
0.0075
0.0050
0.0025
0.0000
flip rate
0
50
100
150
200
250
index

FIG. 5B

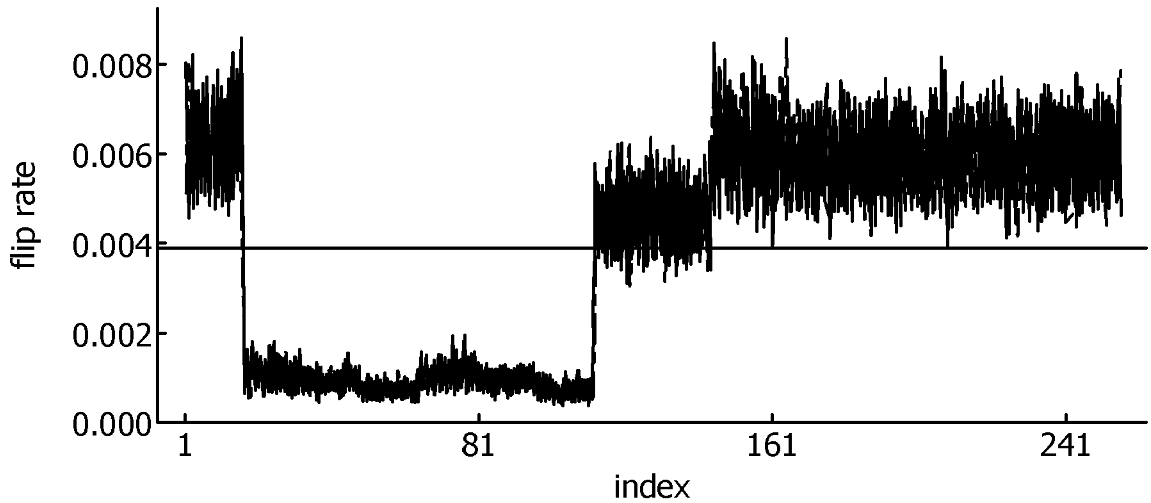
0.008
0.006
0.004
0.002
0.000
flip rate
1
81
161
241
index

FIG. 5C

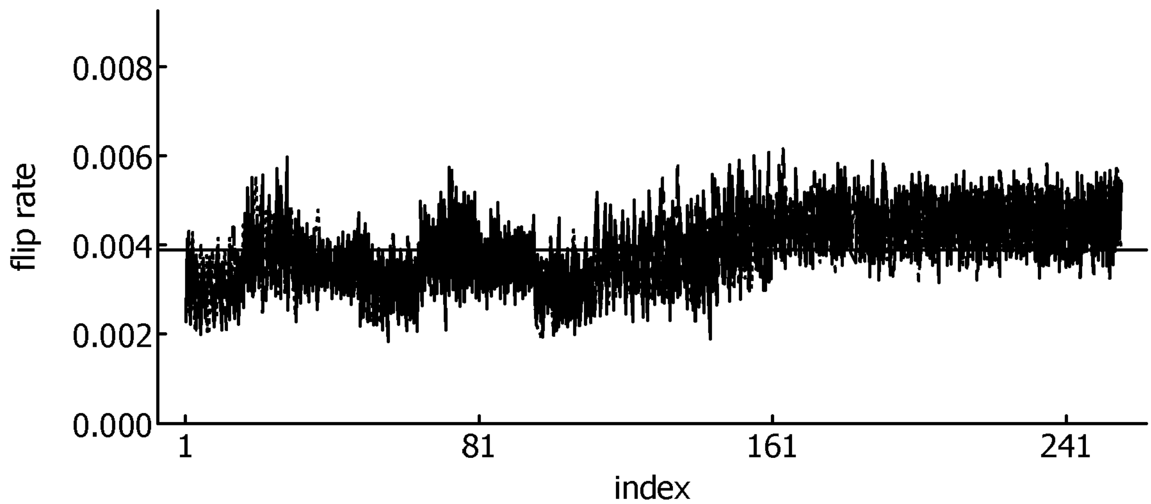

FIG. 6

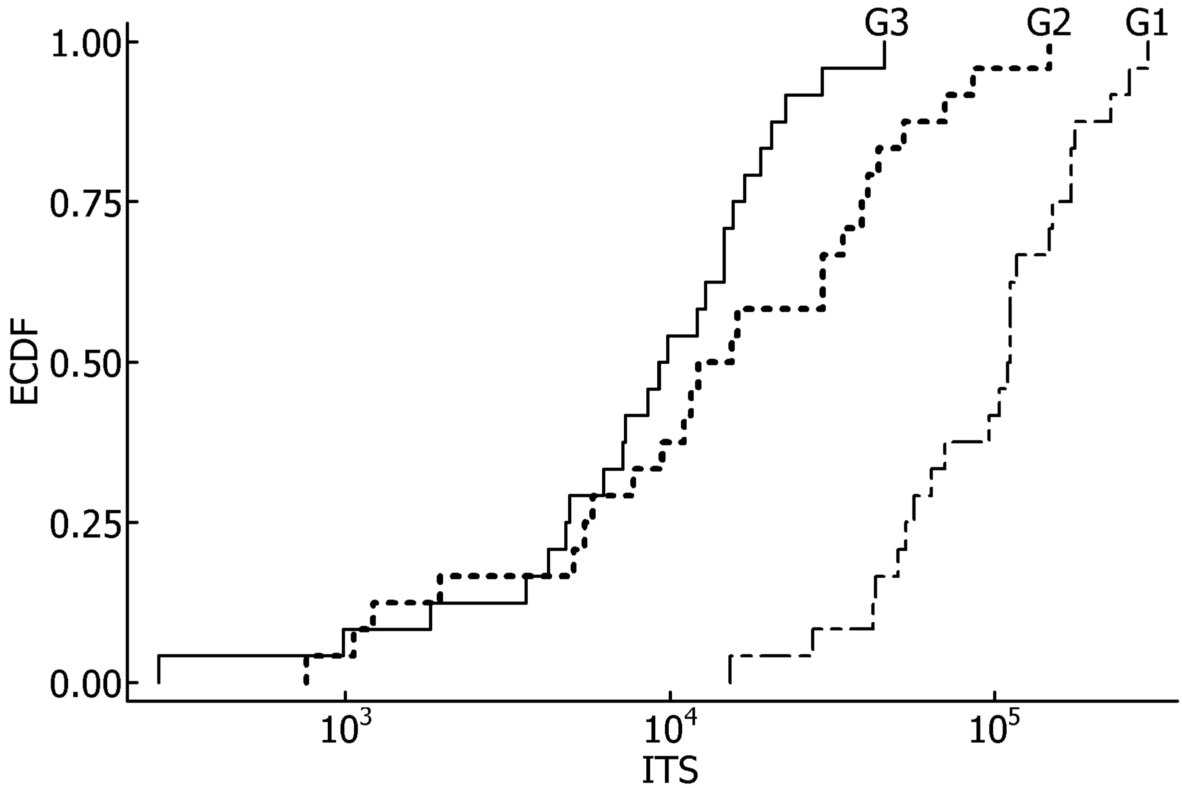

FIG. 7

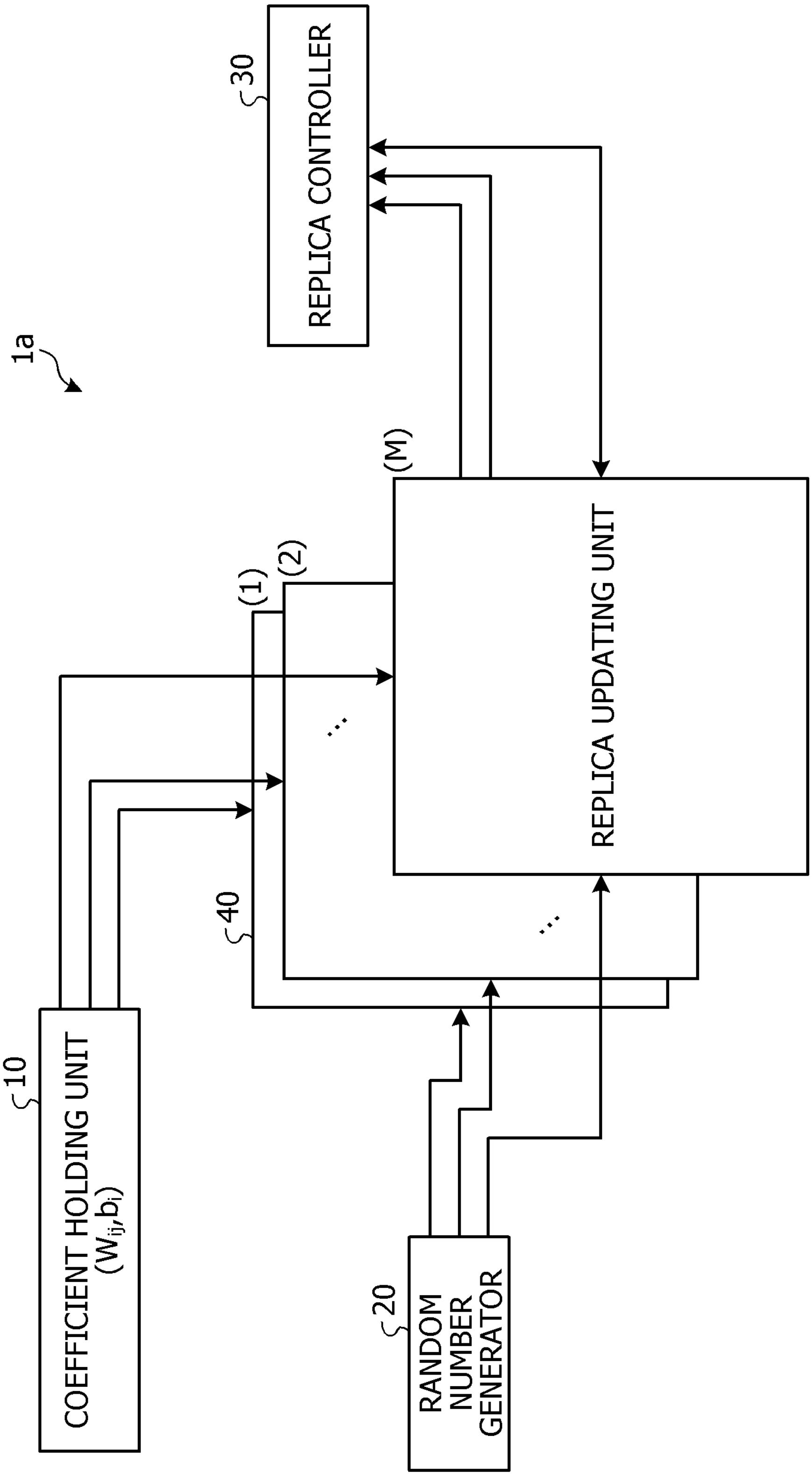
1a
30
REPLICA CONTROLLER
(M)
(2)
(1)
REPLICA UPDATING UNIT
40
10
COEFFICIENT HOLDING UNIT
($W_{ij}$,$b_i$)
20
RANDOM
NUMBER
GENERATOR

FIG. 8

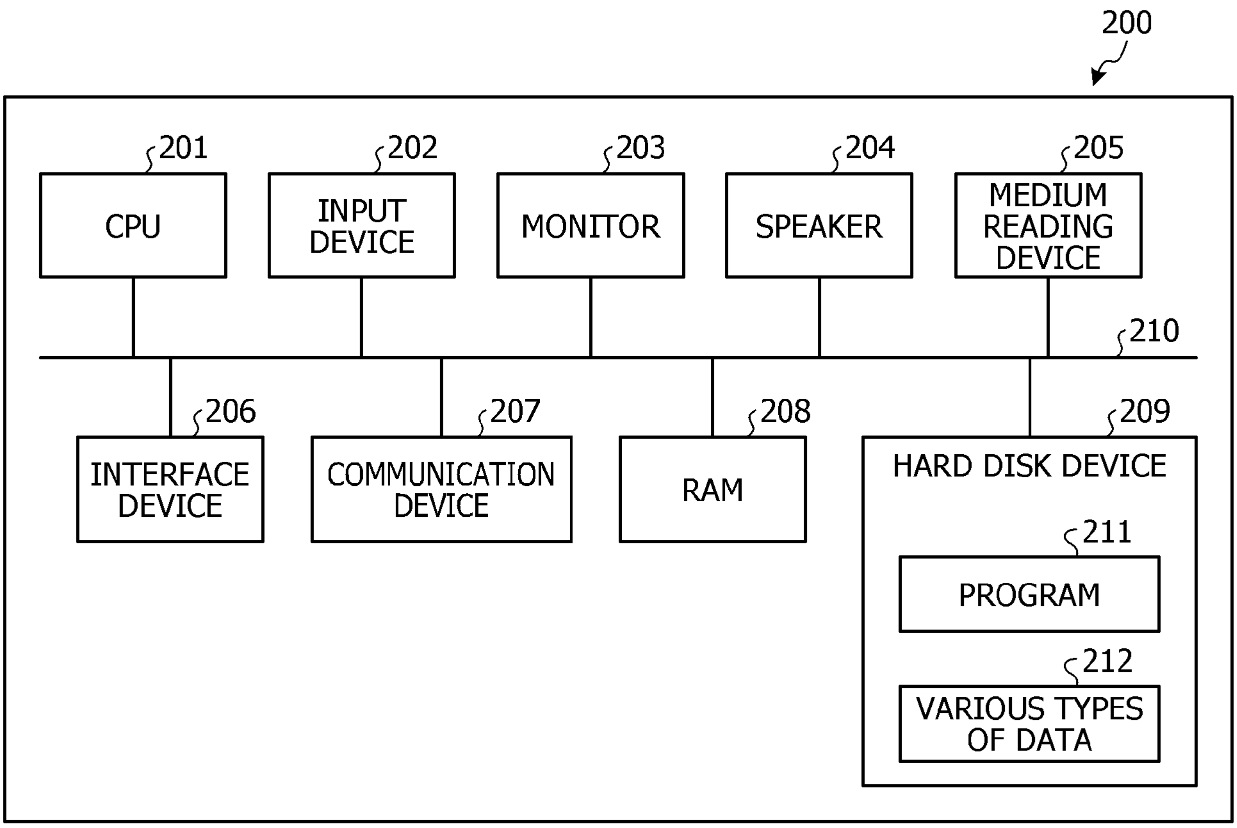
200
201
CPU
202
INPUT DEVICE
203
MONITOR
204
SPEAKER
205
MEDIUM READING DEVICE
210
206
INTERFACE DEVICE
207
COMMUNICATION DEVICE
208
RAM
209
HARD DISK DEVICE
211
PROGRAM
212
VARIOUS TYPES OF DATA

Europäisches Patentamt
European Patent Office
Office européen des brevets

# EUROPEAN SEARCH REPORT

Application Number
EP 22 21 4515

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2020/363848 A1 (KOYAMA JUMPEI [JP] ET AL) 19 November 2020 (2020-11-19)<br>* paragraph [0193] - paragraph [0197]; figure 10 *<br>* paragraph [0043] *<br>* paragraph [0060] *<br>* paragraph [0080] *<br>* paragraph [0103] - paragraph [0104] *<br>* paragraph [0045] - paragraph [0046] *<br>* paragraph [0091] - paragraph [0092] *<br>* paragraph [0109] - paragraph [0110] *<br>* paragraph [0066] - paragraph [0067] *<br>----- | 1-8 | INV.<br>G06F17/11<br>G06N5/01<br>G06N7/01 |
| A | DABIRI KEIVAN ET AL: "Replica Exchange MCMC Hardware With Automatic Temperature Selection and Parallel Trial",<br>IEEE TRANSACTIONS ON PARALLEL AND DISTRIBUTED SYSTEMS, IEEE, USA,<br>vol. 31, no. 7, 5 March 2020 (2020-03-05), pages 1681-1692, XP011776259,<br>ISSN: 1045-9219, DOI: 10.1109/TPDS.2020.2972359<br>[retrieved on 2020-03-04]<br>* page 1681, right-hand column, paragraph 2 - page 1682, left-hand column, paragraph 2 *<br>* page 1682, right-hand column, last paragraph - page 1683, right-hand column, paragraph 2 *<br>* page 1686, right-hand column, paragraph 2 - page 1688, right-hand column, paragraph 2 *<br>----- | 1-8 | TECHNICAL FIELDS SEARCHED (IPC)<br>G06F<br>G06N |

The present search report has been drawn up for all claims

1

| Place of search | Date of completion of the search | Examiner |
|---|---|---|
| Munich | 9 August 2023 | Herri, Edmond |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT ON EUROPEAN PATENT APPLICATION NO. EP 22 21 4515

This annex lists the patent family members relating to the patent documents cited in the above-mentioned European search report. The members are as contained in the European Patent Office EDP file on
The European Patent Office is in no way liable for these particulars which are merely given for the purpose of information.

09-08-2023

| Patent document cited in search report | Publication date | Patent family member(s) | Publication date |
|---|---|---|---|
| US 2020363848 A1 | 19-11-2020 | CN 111930007 A | 13-11-2020 |
| | | EP 3739473 A2 | 18-11-2020 |
| | | JP 7201911 B2 | 11-01-2023 |
| | | JP 2020187453 A | 19-11-2020 |
| | | US 2020363848 A1 | 19-11-2020 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010250599 A
- WO 202054062 A